# EUROPÄISCHE PATENTSCHRIFT

(11) **EP 1 430 667 B1**
(45) Veröffentlichungstag und Bekanntmachung des Hinweises auf die Patenterteilung: **03.05.2006**
(21) Anmeldenummer: 02769936.2
(22) Anmeldetag: 10.09.2002
(51) Int. Cl.: H04L 12/64, H04Q 11/04

(54) **VERFAHREN ZUR DESENSIBILISIERUNG DES PAKETBASIERTEN ANSCHLUSSES VON TEILNEHMERN AN EIN VERMITTLUNGSSYSTEM**
METHOD FOR DESENSITIZING PACKET-BASED CONNECTION OF SUBSCRIBERS TO A SWITCHING SYSTEM
PROCEDE DE DESENSIBILISATION DE LA CONNEXION PAR PAQUETS D'ABONNES A UN SYSTEME DE COMMUTATION

(30) Priorität: 27.09.2001 DE 10147771
(43) Veröffentlichungstag der Anmeldung: 23.06.2004
(73) Patentinhaber: SIEMENS AKTIENGESELLSCHAFT, 80333 München (DE)
(72) Erfinder: LÖBIG, Norbert, 64291 Darmstadt (DE)
(86) Internationale Anmeldenummer: PCT/DE2002/003355
(87) Internationale Veröffentlichungsnummer: WO 2003/032590

(56) Entgegenhaltungen:
- WO-A-02/51196
- DE-A- 19 951 047
- DEBAR H ET AL: "Towards a taxonomy of intrusion-detection systems" COMPUTER NETWORKS, ELSEVIER SCIENCE PUBLISHERS B.V., AMSTERDAM, NL, Bd. 31, Nr. 8, 23. April 1999 (1999-04-23), Seiten 805-822, XP004304519 ISSN: 1389-1286
- ARAZI D: "VOICE OVER DSL" FUNKSCHAU, FRANZIS-VERLAG K.G. MUNCHEN, DE, Bd. 72, Nr. 24, 12. November 1999 (1999-11-12), Seiten 64-66, XP000940343 ISSN: 0016-2841
- GILLESPIE A: "Management of ATM port relay systems" GLOBAL TELECOMMUNICATIONS CONFERENCE, 1995. CONFERENCE RECORD. COMMUNICATION THEORY MINI-CONFERENCE, GLOBECOM '95., IEEE SINGAPORE 13-17 NOV. 1995, NEW YORK, NY, USA,IEEE, US, 13. November 1995 (1995-11-13), Seiten 140-144, XP010164259 ISBN: 0-7803-2509-5

## Beschreibung

Der Erfindungsgegenstand betrifft ein Verfahren zur Überwachung eines Paketnetz-Vermittlungssystems hinsichtlich einer Überlast durch fehlerhafte oder manipulierte Pakete.

Bei der leitungsvermittelten Telephonie, für die auch das Akronym PSTN (public switched telephone network) verwendet wird, werden Teilnehmer des öffentlichen Fernsprechnetzes über Leitungen an die ihnen zugeordneten bzw. für sie zuständigen Vermittlungssysteme der öffentlichen Vermittlungstechnik angeschlossen. Über eventuell dem Vermittlungssystem vorgelagerte Teilnehmeranschlusskonzentratoren oder Teilnehmerzugangsnetze - häufig mit ihrem englischen Namen Access Networks bezeichnet - kann eine Zusammenführung von Teilnehmeranschlüssen erfolgen, deren Ergebnis jedoch in dem ebenfalls leitungsbasierten Anschluss des vermittelten Teilnehmers an das Vermittlungssystem besteht. Die Zusammenführung der Teilnehmeranschlüsse wird im allgemeinen mit Hilfe der Zeitmultiplextechnik, beispielsweise PCM (Pulse Code Modulation) oder SDH (Synchronous Digital Hierarchy) bewerkstelligt.

Im Rahmen der Zunahme von Diensten, die auf variablen Bitraten basieren, haben die Teilnehmer des öffentlichen Fernsprechnetzes zunehmend Zugriff auf Paketnetze, namentlich Zugriff auf das Internet über breitbandige Übertragungsnetze, wie z.B. LANs (Local Area Networks), Netze mit DSL-Anschlüssen (Digital Subscriber Line-) oder Kabelnetze. Für Teilnehmer mit Zugriff auf ein Paketnetz bietet es sich an, die für den paketbasierten Zugriff notwendigen Leitungen bzw. Netze für den Telefonierverkehr mitzubenutzen, anstatt separate, schmalbandige Leitungen/Netze für Telephonie zu unterhalten.

Für PSTN Teilnehmer, die auf ein paketbasiertes Netz zugreifen, gibt es teilnehmernahe Netzzugangseinrichtungen, wie z.B. IADs (Integrated access devices) oder Kabelmodems, die das teilnehmerseitige Übertragungsnetz, beispielsweise LAN, Netz mit DSL-Peripherie oder Kabelnetz, terminieren. Teilnehmerseitig haben derartige Netzzugangseinrichtungen analoge oder ISDN (Integrated Services Digital Network) Anschlüsse; paketnetzseitig werden Telephoniesignalisierung und Nutzdaten mit gewissen Sicherungsprotokollen übertragen.

Daneben gibt es paketbasierte Endgeräte, z.B. auf dem Internet Protokoll (IP) basierte Telefone, mit eigens für den Einsatz im Paketnetz definierten Signalisierungsprotokollen, wie z.B. von der International Telecommunications Union (ITU) festgelegte H.323 Standard oder das SIP (Session Initiation Protocol) Protokoll gemäß IETF.

Bei dem Verbindungsaufbau beispielsweise von Telefonaten über Paketnetze ist i.a. eine Steuervorrichtung - im folgenden als Paketnetz-Vermittlungssystem bezeichnet - beteiligt, die z.B. Funktionen der Zugangskontrolle, der Signalisierung, der Verbindungssteuerung und Vergebührung ausführt. Eine zentrale Funktion eines derartigen Paketnetz-Vermittlungssystems ist die bei einem über ein Paketnetz übertragenes PSTN Telefonat für den Zugang zum öffentlichen Netz notwendige Rufnummernzuordnung (entsprechend dem Nummerierungsplan E.164 im internationalen Netz) zu der für die Paketnetzübertragung gültigen IP-Adresse. Dieses Paketnetz-Vermittlungssystem kann z.B. einen entsprechend ausgestatteten Server im IP-Netz - häufig als Gatekeeper bezeichnet - oder ein für die entsprechenden für diese zusätzlichen Paketnetz-bezogenen Funktionen ausgerüstetes PSTN Vermittlungssystem umfassen. Zusätzlich können dezentral Ressourcen für Steuerungs- oder Kontrollfunktionen in den Netzzugangseinrichtungen vorgesehen sein. Im weiteren wird davon ausgegangen, dass das Paketnetz-Vermittlungssystem eine zentrale Rechner- und Steuereinheit umfasst und als Paket-Vermittlungsstelle bezeichnet wird.

Für einen effizienten Ablauf der steuer- und vermittlungstechnischen Funktionen der Steuervorrichtung kommt der Sicherung der Steuervorrichtung gegen vermittlungstechnische Überlast eine wichtige Funktion zu. Zu einer Überlast kann es z.B. kommen, wenn von defekten oder manipulierten Endgeräten mit einer überhöhten Rate Datenpakete an die Steuervorrichtung übertragen werden. Gerade bei den hohen Qualitätsanforderungen im Rahmen der Sprachübertragung wie geringe Verzögerungszeiten können solche Überlast- bzw. Störfälle zur einer Beeinträchtigung der Funktionalität der Steuervorrichtung für Sprachübertragung führen.

Aus der PSTN Vermittlungstechnik ist ein Verfahren bekannt, bei dem durch ISDN (Integrated Services Digital Network) Anschlüsse verursachte Überlasten bei einem PSTN Vermittlungssystem eingedämmt werden. Das Verfahren kommt bei der Standardschnittstelle V 5.2 einer Vermittlungsstelle zum Zugangsnetz zum Einsatz und ist als Leistungsmerkmal "D-Channel Blocking/Unblocking" der Schnittstelle V 5.2 von der ETSI (European Telecommunications Standards Institute) unter der Nummer ETS 300347 standardisiert. Bei dem Verfahren kann ein PSTN Vermittlungssystem bei einer Überlast den Anschluss - meist mit dem englischen Ausdruck Port bezeichnet -, der für die Überlast verantwortlich zeichnet, identifizieren und den ursächlichen Signalisierungskanal (D-Kanal) gezielt durch Einstellkommandos an das vorgelagerte Zugangsnetz mit V 5.2 Schnittstelle blockieren und gegebenenfalls entblockieren.

Der Erfindung liegt die Aufgabe zugrunde, ein Verfahren für Paketnetze anzugeben, durch das Steuervorrichtungen hinsichtlich einer Überlast durch fehlerhafte oder manipulierte Pakete überwacht werden und das zur Verhinderung von Störfällen bei Steuervorrichtungen durch Überlast beiträgt.

Die Aufgabe wird durch eine Verfahren entsprechend des Oberbegriffs von Anspruch 1 durch dessen kennzeichnende Merkmale gelöst.

Bei dem erfindungsgemäßen Verfahren wird der Durchsatz von bei der Paketnetz-Vermittlungssystem ankommenden Paketen überprüft. Bei Überschreiten eines Schwellenwertes für den Durchsatz von Paketen wird die Netzwerk-Verwaltung alarmiert und von der Netzwerk-Verwaltung eine Überprüfung der Herkunftsadressen der Pakete auf Plausibilität vorgenommen (Anspruch 1). Das Verfahren hat den Vorteil einer Kontrolle bzw. Überprüfung auf Überlast durch an das Paketnetz-Vermittlungssystem übermittelte Signalisierungspakete. Bei einem Überlastfall können Gegenmaßnahmen eingeleitet werden.

Eine mögliche Gegenmaßnahme ist die Abwehr einer Überlast durch die Neuvergabe von Paketadressen. Dabei wird das Format bzw. Teile des Inhalts der in dem Paketnetz-Vermittlungssystem ankommende Pakete überprüft und Pakete mit unrichtigem Format bzw. unrichtigem Inhalt statistisch erfasst. Bei Überschreiten eines Schwellenwertes für den Durchsatz von Paketen mit unrichtigem Format bzw. unrichtigem Inhalt wird die Netzwerk-Verwaltung alarmiert und von der Netzwerk-Verwaltung den von der Überlast betroffenen Einheiten des Paketnetz-Vermittlungssystem eine neue Paketadresse zugewiesen (Anspruch 2 bzw. Anspruch 3). Der Lösung mit Neuvergabe von Paketadressen kommt selbstständige Bedeutung zu. Durch diese Lösung werden Störfälle durch eine Überlast von Paketen mit unrichtigem Format verhindert.

Paketnetzzugangseinrichtungen versehen häufig auch Steuerungs- bzw. Vermittlungsfunktionen und können einen Teil eines dezentralen Vermittlungssystems beinhalten. Überlastfälle bei Paketnetzzugangseinrichtungen können deshalb den sachgerechten Ablauf der Datenübertragung gefährden. Erfindungsgemäß wird eine Paketnetzzugangseinrichtung vor Überlast geschützt, indem das Format oder Teile des Inhalts der bei einer Paketnetzzugangseinheit im Zuständigkeitsbereich der Paketnetz-Vermittlungssystem ankommenden Paketen überprüft wird. Pakete mit unrichtigem Format bzw. Inhalt werden statistisch erfasst. Bei Überschreiten eines Schwellenwertes für den Durchsatz von Paketen mit unrichtigem Format bzw. Inhalt in der Paketnetzzugangseinheit wird die Netzwerk-Verwaltung alarmiert, und von der Netzwerk-Verwaltung den von der Überlast betroffenen Netzzugangseinheiten bzw. Ports eine neue Paketadresse zugewiesen. Zudem werden das Paketnetz-Vermittlungssystem und zwischen der Paketnetz-Vermittlungsstelle und der Netzzugangseinheit angeordnete Einrichtungen für die Verwendung der neu zugeteilten Paketadresse eingestellt (Anspruch 4).

Der Gesamtdurchsatz an Paketen und der Durchsatz an Paketen mit unrichtigem Format oder Inhalt in der Paketnetz-Vermittlungsstelle bzw. den Netzzugangseinheiten werden in regelmäßigen zeitintervallen überprüft (Anspruch 5), wodurch Änderungen in der Belastung durch Pakete mit unrichtigem Format bzw. Inhalt verfolgt werden können.

Bei dem Paketnetz-Vermittlungssystem bzw. den Netzzugangseinheiten ankommende Pakete werden auf die Richtigkeit der Herkunftsadresse, der Portbezüge und des Paketformats überprüft (Anspruch 6). Neben dem Paketformat sind die Herkunftsadresse und Portnummer wichtige Informationen bei der Identifizierung von störenden Einheiten, bzw. störenden Anwendungen. Den folgenden Satz habe ich nicht verstanden. Vielleicht ist er verzichtbar?: Im letzteren Fall kann es sich beispielsweise um eine Anwendung handeln, der im Rahmen der TCP Protokolls eine Portnummer zugewiesen wurde.

Um Pakete von einem Störer abzuwehren, werden in den Routing-Tabellen der durch die Änderung von Paketadressen betroffenen Einheiten des Paketnetz-Vermittlungssystems, der Netzzugangseinheiten und von Routern im Zuständigkeitsbereich der Paketnetz-Vermittlungssystem neue Paketadressen eingetragen (Anspruch 8). Durch die Anpassung von den Routing-Tabellen der betroffenen Einheiten von Paketnetz-Vermittlungssystem, Netzzugangseinheiten und - falls vorhanden - Routern werden Pakete von Störern umgeleitet bzw. verworfen. Ein entsprechende Änderung der Routing-Tabellen kann beispielsweise während eines Neustarts des Systems vorgenommen werden.

Als fehlerhaft identifizierte Ports werden zwecks Entstörung alarmiert (Anspruch 10). Solange eine Störung durch fehlerhafte Ports vorliegt, werden die entsprechenden Ports gesperrt oder die Einstellungen von Paketnetz-Vermittlungssystem und Netzzugangseinheiten so geändert, dass von den Ports ankommende Pakete verworfen werden (Anspruch 11). Gesperrte, als fehlerhaft identifizierte Ports werden in regelmäßigen Zeitintervallen entsperrt. Im Zuge der Entsperrung wird eine Überprüfung der von dem Port übermittelten Pakete vorgenommen und bei der Überprüfung korrekt funktionierende Ports wieder vermittlungstechnisch in Betrieb genommen (Anspruch 12). Auf diese Weise lassen sich fehlerhafte Ports sperren und - bei Behebung der Probleme - wieder entsperren, wodurch eine fiberlastabwehr bei gleichzeitig geringem Eingriff in die vermittlungstechnischen Abläufe gewährleistet wird. Der Lösung mit Sperrung von fehlerhaften Ports kommt selbstständige Bedeutung zu.

Mit Hilfe des Verfahrens kann ein Paketnetz-Vermittlungssystem geschützt werden, das mit einem PSTN Vermittlungssystem gebildet ist. Dabei sind
-- bei dem Paketnetz-Vermittlungssystem Paketanpassungs-Einheiten zur Anpassung an die physikalischen Schnittstellen des Paketnetzes, an paketbasierte Adressierung und paketbasierte Signalisierungsprotokolle vorgesehen, und
-- das PSTN Vermittlungssystem mit Anschlussgruppen gebildet (Anspruch 14). Bei dem erfindungsgemäßen Verfahren werden dann bei den Paketanpassungs-Einheiten des Vermittlungssystems ankommende Pakete für die Weiterleitung an die Anschlussgruppen angepasst und an die Anschlussgruppen weitergeleitet. In den Anschlussgruppen werden die von den Paketanpassungs-Einheiten weitergeleiteten Pakete mit Hilfe von im Rahmen der Funktionen des PSTN Vermittlungssystems vorhandenen Überprüfungsmittel überprüft und im Störungsfall die im Rahmen der Funktionen des PSTN Vermittlungssystems vorgesehenen Gegenmaßnahmen durchgeführt (Anspruch 15). Vorteilhaft wirkt sich dabei aus, dass auf die vorhandene Funktionalität des PSTN Vermittlungssystem zurüchgegriffen werden kann. So kann es sich z.B. bei den in dem PSTN Vermittlungssystem vorgesehenen Entstörungsfunktionen um das im Rahmen des V5.2 Standards definierte D-Channel Blocking/Unblocking handeln (Anspruch 16).

Zusätzliche vorteilhafte weiterbildungen des Erfindungsgegenstands sind in den weiteren Unteransprüchen angegeben.

Im Folgenden wird der Erfindungsgegenstand anhand von zwei Ausführungsbeispielen und Figuren näher dargestellt. Es zeigen
Fig. 1: klassische und paketbasierte Teilnehmer an einer paketbasierten Vermittlungsstelle,
Fig. 2: für Paketverarbeitung angepasste Vermittlungsstelle, die mit einer Netzzugangseinrichtung verbunden ist.

Dabei bezeichnen gleich Bezugszeichen gleiche Elemente.

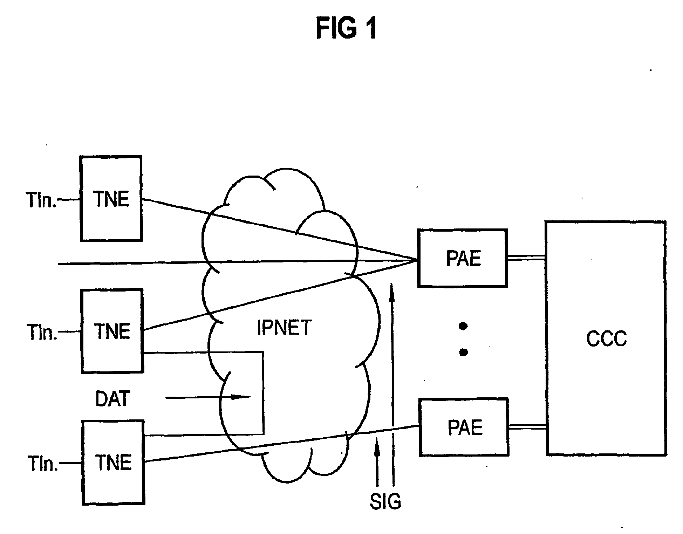

In Figur 1 ist eine Kontrolleinheit (CCC: Call Control Core) einer PSTN Vermittlungsstelle dargestellt, die für Signalisierungs-, Steuer- und Kontrollaufgaben im Paketnetz IPNET mit Paketanpassungseinheiten PAE ausgestattet wurde. Für den Verbindungsaufbau beispielsweise bei Telefonaten über das Paketnetz IPNET werden Signalisierungsinformationen von den beteiligten Teilnehmeranschlüssen an die Paketanpassungseinheiten PAE der Vermittlungsstelle übermittelt. Dabei kann es sich um über Netzzugangseinheiten TNE mit dem Paketnetz verbundene PSTN-Anschlüsse /Tln. oder direkt an das Paketnetz angeschlossene, mit Sprachfunktion unterstützenden Endgeräten ausgerüstete paketbasierte P-Tln. handeln. Während Signalisierungsinformationen SIG über die Vermittlungsstelle geführt werden, werden Nutzdaten DAT direkt über das Paketnetz zwischen den Netzzugangseinrichtungen TNE bzw. den IP-Endgeräten von paketbasierten P-Tln. ausgetauscht. Durch das erfindungsgemäße Verfahren werden die Paketanpassungseinheiten PAE vor einer Überlast von Signalisierungsinformationen SIG geschützt. Beispielsweise treffen bei der Paketanpassungseinheit PAE mit einer hohen Rate Signalisierungsinformationen SIG von einer der Netzzugangseinrichtung TNE störungsbedingt ein. Durch diese Signalisierungsinformationen SIG von der Netzzugangseinrichtung TNE wird die Signalisierung SIG für andere Verbindungen bzw. Endgeräte Tln, die beispielsweise Verfügbarkeits- und Qualitätsanforderungen für Sprachübertragungen genügen muss, gestört. In der Paketanpassungseinrichtung PAE werden die von den Netzzugangseinrichtungen TNE übermittelten Nachrichten auf Richtigkeit von Adressen, Portbezügen und Nachrichtenformat überprüft. Dabei wird beispielsweise festgestellt, dass die von der gestörten Netzzugangseinrichtung TNE übermittelten Nachrichten ein unrichtiges Format besitzen. Die Netzwerkverwaltung wird dann von der Vermittlungsstelle über die Störung informiert. Vom der Netzwerkverwaltung wird dann eine Änderung der Adressen zur Entstörung angestoßen. Beispielsweise bekommt die störende Netzzugangseinheit TNE eine neue Paketnetzadresse in TNE und PAE, was dazu führt, dass die bei der Paketnetzanpassungseinrichtung PAE ankommenden störenden Nachrichten verworfen werden.

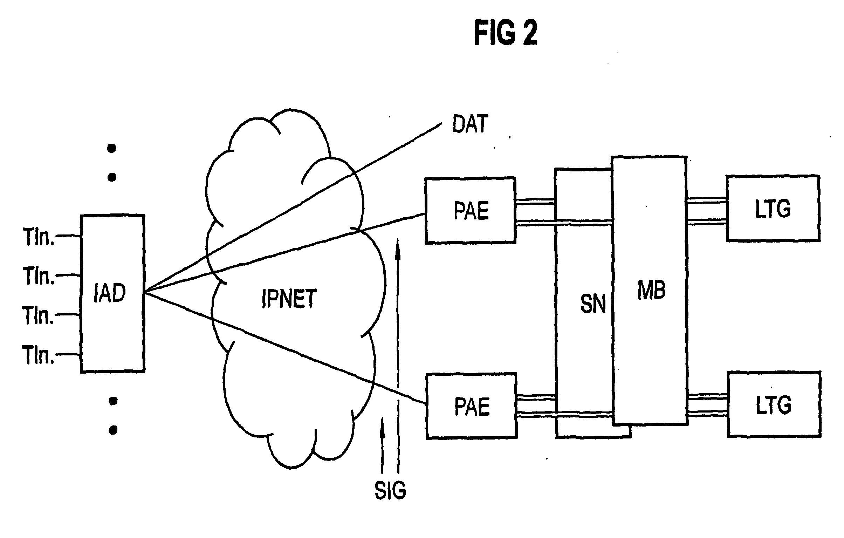

Bei dem zweiten Ausführungsbeispiel (Figur 2) sind eine Anzahl von PSTN Telephonieteilnehmern Tln über XDSL-Strecken und einer Netzzugangseinrichtung IAD (IAD: Integrated Access Device) an ein Vermittlungssystem angeschlossen, das für die Signalisierung des über das Paketnetz IPNET abgewickelten Datenverkehrs mit Paketanpassungseinheiten PAE ausgestattet ist. Zudem weist das Vermittlungssystem ein Koppelnetz SN, ein Nachrichtenverteilsystem MB und Anschlussgruppen LTG (LTG: Line Trunk Group)auf (?). Das Paketnetz IPNET ist ein auf dem Internetprotokoll basierendes Netz. Nutzdaten DAT werden direkt zwischen der Netzzugangseinrichtung IAD und einer anderen Netzzugangseinrichtung TNE bzw. einem IP-Endgerät ausgetauscht. Die Teilnehmersignalisierung wird über das Vermittlungssystem abgewickelt. Beispielsweise werden durch ein gestörtes Port zu viele Meldungen pro Zeiteinheit an die Netzanpassungseinheit PAE übermittelt. Diese fehlerbedingten Meldungen werden in der Netzzugangseinrichtung IAD oder in der Paketanpassungseinrichtung PAE mittels Schwellwertüberwachung detektiert. Zur Entstörung wird das Netzwerkmanagement alarmiert. Vom Netzwerkmanagement wird zur Blokkierung des gestörten Ports eine Nachricht an die Paketanpassungseinheit PAE geschickt, wodurch ihrerseits die Anschlussgruppe LTG und damit die Steuereinheiten des Vermittlungssystems benachrichtigt wird. Das Vermittlungssystem konfiguriert daraufhin das betroffene Port außer Betrieb. Bei einer Normalisierung des Portverhaltens wird diese von der Netzzugangseinrichtung IAD erkannt und an das Vermittlungssystem signalisiert. Das Vermittlungssystem nimmt daraufhin das Port wieder in Betrieb.

Für ein fehlerhaftes ISDN-Port am IAD kann gegebenenfalls die im Rahmen des V5.2-Standards definierte D-Channel Blokking/Unblocking Funktion eines ISDN-Vermittlungssystems verwendet werden. Hierzu werden die D-Kanal-Meldungen des gestörten Ports an der Netzzugangseinrichtung IAD über das Stream Control Transmission Protocol (SCTP) in die Paketanpassungseinheit PAE geführt und dort weitergeleitet an die Nachrichtenanschlussgruppen LTG. In den Teilnehmeranschlussgruppen LTG kann dann das für die V5.2 bekannte statistische Verfahren auf die D-Kanal-Meldungen bzw. Signalisierungsinformationen des Ports angewendet werden. Bei zuviel Meldungen pro zeiteinheit wird die Sperre des Ports eingeleitet, was an die Paketnetzanpassungseinheit TAE gemeldet wird und dort zum Verwurf der von dem gestörten Port ankommenden Meldungen führt. Nach einer gewissen Beruhigungszeit wird das Port von der Nachrichtenanschlussgruppe in der Paketanpassungseinheit PAE entblockiert, um das Verhalten des Portes zu überprüfen. Das Port wird dann wieder blockiert, wenn sich das Verhalten noch nicht normalisiert hat. Anderenfalls erfolgt eine Fehlerendemeldung an das Netzwerkmanagement sowie die erneute z. B. automatische Inbetriebnahme des Portes.

## Patentansprüche

1. Verfahren zur Überwachung eines Paketnetz-Vermittlungssystems, wobei das Paketnetz-Vermittlungssystem eine zentrale Rechen- und Steuereinheit aufweist, die den Verbindungsaufbau von Telefonaten über ein Paketnetz steuert, hinsichtlich einer Überlast durch fehlerhafte oder manipulierte Pakete,
**dadurch gekennzeichnet,**
- **dass** der Durchsatz von bei dem Paketnetz-Vermittlungssystem ankommenden Paketen durch das Paketnetz-Vermittlungssystem überprüft wird,
- **dass** bei Überschreiten eines Schwellenwertes für den Durchsatz von Paketen eine Netzwerk-Verwaltung alarmiert wird, und
- **dass** von der Netzwerk-Verwaltung eine Überprüfung der Herkunftsadressen der Pakete auf Plausibilität vorgenommen wird.

2. Verfahren nach Anspruch 1
**dadurch gekennzeichnet,**
- **dass** das Format der bei der Paketnetz-Vermittlungssystem ankommende Pakete überprüft wird,
- **dass** Pakete mit unrichtigem Format statistisch erfasst werden,
- **dass** bei Überschreiten eines Schwellenwertes für den Durchsatz von Paketen mit unrichtigem Format die Netzwerk-Verwaltung alarmiert wird, und
- **dass** von der Netzwerk-Verwaltung den von der überlast betroffenen Einheiten des Paketnetz-Vermittlungssystem neue Paketadressen zugewiesen werden.

3. Verfahren nach einem der vorhergehenden Ansprüche
**dadurch gekennzeichnet,**
- **dass** Teile des Inhalts der bei der Paketnetz-Vermittlungssystem ankommenden Pakete überprüft werden,
- **dass** Pakete mit unrichtigem Inhalt statistisch erfasst werden,
- **dass** bei Überschreiten eines Schwellenwertes für den Durchsatz von Paketen mit unrichtigem Inhalt die Netzwerk-Verwaltung alarmiert wird, und
- **dass** von der Netzwerk-Verwaltung den von der Überlast betroffenen Einheiten des Paketnetz-Vermittlungssystem eine neue Paketadressen zugewiesen werden.

4. Verfahren nach einem der vorhergehenden Ansprüche,
**dadurch gekennzeichnet,**
- **dass** das Format oder Teile des Inhalts der bei einer Paketnetzzugangseinheit (TNE) im Zuständigkeitsbereich der Paketnetz-Vermittlungssystem ankommenden Paketen überprüft wird,
- **dass** Pakete mit unrichtigem Format bzw. Inhalt statistisch erfasst werden,
- **dass** bei Überschreiten eines Schwellenwertes für den Durchsatz von Paketen mit unrichtigem Format bzw. Inhalt bei der Paketnetzzugangseinheit (TNE) die Netzwerk-Verwaltung alarmiert wird, und
- **dass** von der Netzwerk-Verwaltung den von der Überlast betroffenen Netzzugangseinheiten neue Paketadressen zugewiesen werden sowie das Paketnetz-Vermittlungssystem und zwischen der Paketnetz-Vermittlungsstelle und der Netzzugangseinheit (TNE) angeordnete Einrichtungen für die Verwendung der neu zugeteilten Paketadressen eingestellt werden.

5. Verfahren nach einem der vorhergehenden Ansprüche,
**dadurch gekennzeichnet,**
- **dass** der Gesamtdurchsatz an Paketen und der Durchsatz an Paketen mit unrichtigem Format oder Inhalt in der Paketnetz-Vermittlungsstelle bzw. Netzzugangseinheiten (TNE) in regelmäßigen Zeitintervallen überprüft werden.

6. Verfahren nach einem der vorhergehenden Ansprüche,
**dadurch gekennzeichnet,**
- **dass** in dem Paketnetz-Vermittlungssystem bzw. Netzzugangseinheiten (TNE) ankommende Pakete auf die Richtigkeit der Herkunftsadresse, der Portbezüge und des Paketformats überprüft werden.

7. Verfahren nach einem der vorhergehenden Ansprüche,
**dadurch gekennzeichnet,**
- **dass** in dem Paketnetz-Vermittlungssystem bzw. Netzzugangseinheiten (TNE) als fehlerhaft identifizierte Pakete verworfen werden.

8. Verfahren nach einem der vorhergehenden Ansprüche,
**dadurch gekennzeichnet,**
- **dass** in Routing-Tabellen der durch die Änderung von Paketadressen betroffenen Einheiten des Paketnetz-Vermittlungssystems, der Netzzugangseinheiten (TNE) und dem Paketnetz-Vermittlungssystems vorgelagerten Routern neue Paketadressen eingetragen werden.

9. Verfahren nach einem der vorhergehenden Ansprüche,
**dadurch gekennzeichnet,**
- **dass** wenigstens ein Teil der Adressänderungen durch symbolische Adressierung erfolgt.

10. Verfahren nach einem der vorhergehenden Ansprüche,
**dadurch gekennzeichnet,**
- **dass** bei der Oberprüfung von Paketen Ports identifiziert werden, von denen die Pakete übermittelt wurden, und
- **dass** als fehlerhaft erkannte Ports zur Entstörung alarmiert werden.

11. Verfahren nach Anspruch 10,
**dadurch gekennzeichnet,**
- **dass** als fehlerhaft erkannte Ports gesperrt oder die Einstellungen der Funktionalität von Paketnetz-Vermittlungssystem und Netzzugangseinheiten (TNE) so geändert werden, dass von den Ports ankommende Pakete verworfen werden.

12. Verfahren nach Anspruch 10,
**dadurch gekennzeichnet,**
- **dass** als fehlerhaft erkannte und gesperrte Ports in gewissen Zeitintervallen entsperrt werden,
- **dass** im Zuge der Entsperrung eine Überprüfung der von dem Port übermittelten Pakete vorgenommen wird, und
- **dass** bei der Überprüfung korrekt funktionierende Ports wieder vermittlungstechnisch in Betrieb genommen werden.

13. Verfahren nach einem der vorhergehenden Ansprüche,
**dadurch gekennzeichnet,**
- **dass** es sich bei dem Paketnetz um ein auf dem Internet Protokoll basierendes Netz handelt.

14. Verfahren nach einem der vorhergehenden Ansprüche,
**dadurch gekennzeichnet,**
- **dass** eine Paketnetz-Vermittlungssystem gegeben ist, das mit einem PSTN Vermittlungssystem gebildet ist, wobei
-- bei dem Paketnetz-Vermittlungssystem Paketanpassungs-Einheiten (PAE) zur Anpassung an die physikalischen Schnittstellen des Paketnetzes, an paketbasierte Adressierung und paketbasierte Signalisierungsprotokolle vorgesehen sind, und
-- das PSTN Vermittlungssystem mit Anschlussgruppen (LTG) gebildet ist.

15. Verfahren nach Anspruch 14,
**dadurch gekennzeichnet,**
- **dass** bei den Paketanpassungs-Einheiten (PAE) des Vermittlungssystems ankommende Pakete für die Weiterleitung an die Anschlussgruppen (LTG) angepasst und an die Anschlussgruppen (LTG) weitergeleitet werden, und
- **dass** in den Anschlussgruppen (LTG) die von den Paketanpassungs-Einheiten (PAE) weitergeleiteten Pakete mit Hilfe von im Rahmen der Funktionen des PSTN Vermittlungssystems vorhandenen Überprüfungsmittel überprüft werden und im Störungsfall die im Rahmen der Funktionen des PSTN Vermittlungssystem vorgesehenen Gegenmaßnahmen durchgeführt werden.

16. Verfahren nach Anspruch 15,
**dadurch gekennzeichnet,**
- **dass** es sich bei den in der PSTN Vermittlungssystem vorgesehenen Entstörungsfunktionen um das im Rahmen des V5.2 Standards definierte D-Channel Blocking/Unblocking handelt.

17. Verfahren nach einem der vorhergehenden Ansprüche,
**dadurch gekennzeichnet,**
- **dass** es sich bei einer der Netzzugangseinheiten (TNE) um eine Integrated Access Device (IAD) oder ein Access Gateway zur Terminierung von PSTN/ISDN Telefonieleitungen und Anpassung der Telefoniedaten für das Paketnetz handelt und
- **dass** zur Signalisierung zwischen der Netzzugangseinheit (TNE) und dem Paketnetz-Vermittlungssystem das Mediagateway Control Protokoll oder H.248 verwendet wird.

18. Verfahren nach einem der vorhergehenden Ansprüche,
**dadurch gekennzeichnet,**
- **dass** die Funktionen von Paketanpassungseinheiten (PAE) und Anschlussgruppen (LTG) auf einer gemeinsamen peripheren Hardware Plattform des Vermittlungssystems zur Verfügung gestellt werden.

## Revendications

1. Procédé de contrôle d'un système de commutation de réseau de paquets, le système de commutation de réseau de paquets présentant une unité de calcul et de commande centrale qui commande l'établissement de connexions de communications téléphoniques via un réseau de paquets, en ce qui concerne une surcharge due à des paquets défectueux ou manipulés,
**caractérisé en ce**
- **que** le débit de paquets arrivant dans le système de commutation de réseau de paquets est contrôlé par le système de commutation de réseau de paquets,
- en ce que, en cas de dépassement d'une valeur de seuil pour le débit de paquets, une gestion de réseau est alarmée et
- en ce qu'un contrôle de vraisemblance des adresses d'origine des paquets est exécuté par la gestion de réseau.

2. Procédé selon la revendication 1,
**caractérisé en ce**
- **que** le format des paquets arrivant dans le système de commutation de réseau de paquets est contrôlé,
- en ce que les paquets ayant un format non correct sont statistiquement enregistrés,
- en ce que, en cas de dépassement d'une valeur de seuil pour le débit de paquets ayant un format non correct, la gestion de réseaux de paquets est alarmée, et
- en ce que de nouvelles adresses de paquets sont affectées par la gestion de réseau aux unités du système de commutation de réseau de paquets, concernées par la surcharge.

3. Procédé selon l'une quelconque des revendications précédentes,
**caractérisé en ce**
- **que** des parties du contenu des paquets arrivant dans le système de commutation de réseau de paquets sont contrôlées,
- en ce que des paquets ayant un contenu non correct sont statistiquement enregistrés,
- en ce que, en cas de dépassement d'une valeur de seuil pour le débit de paquets ayant un contenu non correct, la gestion de réseau est alarmée, et
- en ce que des nouvelles adresses de paquets sont affectées par la gestion de réseau aux unités du système de commutation concernées par la surcharge.

4. Procédé selon l'une quelconque des revendications précédentes,
**caractérisé**
- **en ce que** le format ou les parties du contenu des paquets arrivant dans une unité d'accès au réseau de paquets (TNE) se trouvant dans le champ d'action du système de commutation de réseau de paquets est contrôlé ou sont contrôlées,
- **en ce que** les paquets ayant un format resp. un contenu non correct sont statistiquement enregistrés,
- **en ce que**, en cas de dépassement d'une valeur de seuil pour le débit de paquets ayant un format resp. un contenu non correct dans l'unité d'accès au réseau de paquets (TNE), la gestion de réseau est alarmée, et
- **en ce que** de nouvelles adresses de paquets sont affectées par la gestion de réseau aux unités d'accès au réseau concernées par la surcharge, et en ce que le système de commutation de réseau de paquets et des dispositifs disposés entre le centre de commutation de réseau de paquets et l'unité d'accès au réseau (TNE) sont réglés pour l'utilisation des adresses de paquets nouvellement affectées.

5. Procédé selon l'une quelconque des revendications précédentes,
**caractérisé en ce**
- **que** le débit total de paquets et le débit de paquets ayant un format ou un contenu non correct sont contrôlés à intervalles de temps réguliers dans le centre de commutation de réseau de paquets resp. dans les unités d'accès au réseau (TNE) .

6. Procédé selon l'une quelconque des revendications précédentes,
**caractérisé en ce**
- **que** les paquets arrivant dans le système de commutation de réseau de paquets resp. dans les unités d'accès aux réseaux (TNE) sont contrôlés quant à l'exactitude de l'adresse d'origine, des références de port et du format de paquet.

7. Procédé selon l'une quelconque des revendications précédentes,
**caractérisé en ce**
- **que** les paquets identifiés comme défectueux dans le système de commutation de réseau de paquets resp. dans les unités d'accès au réseau (TNE) sont rejetés.

8. Procédé selon l'une quelconque des revendications précédentes,
**caractérisé en ce**
- **que** des nouvelles adresses de paquets sont inscrites dans des tableaux d'acheminement des unités du système de commutation de réseau de paquets concernées par les adresses de paquets, des unités d'accès au réseau (TNE) et des routeurs en amont du système de commutation de réseau de paquets.

9. Procédé selon l'une quelconque des revendications précédentes,
**caractérisé en ce**
- **qu'**au moins une partie des modifications d'adresses est réalisée par un adressage symbolique.

10. Procédé selon l'une quelconque des revendications précédentes,
**caractérisé en ce**
- **que** lors du contrôle de paquets, des ports sont identifiés, par lesquels les paquets ont été transmis, et
- en ce que les ports identifiés comme défectueux sont alarmés pour l'élimination de la perturbation.

11. Procédé selon la revendication 10,
**caractérisé en ce**
- **que** les ports identifiés comme défectueux sont bloqués ou les réglages de la fonctionnalité du système de commutation de réseau de paquets et des unités d'accès au réseau (TNE) sont modifiés de telle manière que les paquets arrivant des ports sont rejetés.

12. Procédé selon la revendication 10,
**caractérisé en ce**
- **que** les ports identifiés comme défectueux et bloqués sont débloqués dans certains intervalles de temps,
- en ce qu'un contrôle des paquets transmis par le port est exécuté au cours du déblocage, et
- en ce que les ports fonctionnant correctement lors du contrôle sont à nouveau mis en service du point de vue de la technique de commutation.

13. Procédé selon l'une quelconque des revendications précédentes,
**caractérisé en ce**
- **que** le réseau de paquets est un réseau basé sur le protocole Internet.

14. Procédé selon l'une quelconque des revendications précédentes,
**caractérisé en ce**
- **qu'**un système de commutation de réseau de paquets est donné, qui est formé par un système de commutation PSTN,
-- des unités d'adaptation de paquets (PAE) destinées à l'adaptation aux interfaces physiques du réseau de paquets, à l'adressage basé sur les paquets et à des protocoles de signalisation basés sur les paquets étant prévues, et
-- le système de commutation PSTN étant formé par des groupes de connexion (LTG).

15. Procédé selon la revendication 14,
**caractérisé en ce**
- **que** les paquets arrivant dans les unités d'adaptation de paquets (PAE) du système de commutation sont adaptés pour être transmis aux groupes de connexion (LTG) et sont transférés aux groupes de connexion (LTG), et
- en ce que les paquets transférés par les unités d'adaptation de paquets (PAE) sont contrôlés dans les groupes de connexion (LTG) à l'aide de moyen de contrôle présents dans le cadre des fonctions du système de commutation PSTN et en ce qu'en cas de perturbation, les contre-mesures prévues dans le cadre des fonctions du système de commutation PSTN sont exécutées.

16. Procédé selon la revendication 15,
**caractérisé en ce**
- **que** les fonctions d'élimination de perturbation prévues dans le système de commutation PSTN sont le D-Channel Blocking/Unblocking défini dans le cadre de la norme V5.2.

17. Procédé selon l'une quelconque des revendications précédentes,
**caractérisé en ce**
- **que** l'une des unités d'accès au réseau (TNE) est un Integrated Access Device (IAD) ou un Access Gateway destiné à la terminaison de lignes de téléphonie PSTN/ISDN et à l'adaptation de données de téléphonie pour le réseau de paquets et
- en ce que le Media Gateway Control Protocol ou H.248 est utilisé pour la signalisation entre l'unité d'accès au réseau (TNE) et le système de commutation de réseau de paquets.

18. Procédé selon l'une quelconque des revendications précédentes,
**caractérisé en ce**
**que** les fonctions des unités d'adaptation de paquets (PAE) et des groupes de connexion (LTG) sont fournies sur une plateforme matérielle périphérique commune du système de commutation .

## Claims

1. Method for monitoring a packet network switching system, wherein the packet network switching system has a central computing and control unit that controls connection setup from telephone calls via a packet network, for overloads due to defective or manipulated packets,
**characterised in that**
- the throughput of the packets arriving in the packet network switching system through the packet network switching system is checked,
- if a threshold value for the throughput of packets is exceeded, network administration receives an alarm,: and
- the network administration performs validity checks on the originating addresses of the packets.

2. Method according to claim 1
**characterised in that**
- the format of the incoming packets in the packet network switching system is checked,
- packets with an incorrect format are statistically recorded,
- if a threshold value for the throughput of packets with an incorrect format is exceeded, network administration receives an alarm, and
- network administration allocates new packet addresses to the units of the packet network switching system affected by the overload.

3. Method according to one of the previous claims
**characterised in that**
- parts of the contents of the incoming packets in the packet network switching system are checked,
- packets with an incorrect contents are statistically recorded,
- if a threshold value for the throughput of packets with incorrect contents is exceeded, network administration receives an alarm, and
- network administration allocates new packet addresses to the units of the packet network switching system affected by the overload.

4. Method according to one of the previous claims,
**characterised in that**
- the format or parts of the contents of the incoming packets for a packet network access unit (TNE) in the area of responsibility of the packet network switching system are checked,
- packets with an incorrect format or incorrect contents are statistically recorded,
- if a threshold value for the throughput of packets with an incorrect format or incorrect contents is exceeded in the packet network access unit (TNE) the network administration receives an alarm, and
- network administration allocates new packet addresses to the network access units affected by the overload, and the packet network switching system and devices arranged between the packet network exchange and the network access unit (TNE) are set up to use the reassigned packet address.

5. Method according to one of the previous claims,
**characterised in that**
- the overall throughput of packets and the throughput of packets with incorrect formats or contents in the packet network exchange or network access units (TNE) are checked at regular intervals.

6. Method according to one of the previous claims,
**characterised in that**
- packets arriving at the packet network switching system or network access units (TNE) are checked for the correctness of the originating address, the port references and the packet format.

7. Method according to one of the previous claims,
**characterised in that**
- packets identified as defective in the packet network switching system or network access units (TNE) are rejected.

8. Method according to one of the previous claims,
**characterised in that**
- new packet addresses are entered in routing tables of the units of the packet network switching system, the network access units (TNE) and routers upstream of the packet network switching system that are affected by the change of packet addresses.

9. Method according to one of the previous claims,
**characterised in that**
- at least part of the address changes is made by symbolic addressing.

10. Method according to one of the previous claims,
**characterised in that**
- the ports from which the packets were transferred are identified when the packets are checked, and
- ports identified as defective are alarmed for the purposes of fault clearance.

11. Method according to claim 10,
**characterised in that**
- ports identified as defective are blocked or the settings for the functionality of the packet network switching system and network access units (TNE) are changed so that packets arriving from the ports are rejected.

12. Method according to claim 10,
**characterised in that**
- ports identified and blocked as defective are unblocked at certain intervals,
- the packets transferred by the port are checked in the course of unblocking, and
- ports found to be functioning correctly in this check are put back into switching operation.

13. Method according to one of the previous claims,
**characterised in that**
- the packet network is a network based on the internet protocol.

14. Method according to one of the previous claims,
**characterised in that**
- there is a packet network switching system that is embodied by a PSTN switching system in which
-- for the packet network switching system, packet adaptation units (PAE) are provided to adapt to the physical interfaces of the packet network, to packet-based addressing and packet-based signalling protocols, and
-- the PSTN switching system is embodied with line/trunk groups (LTG).

15. Method according to claim 14,
**characterised in that**
- packets arriving at the packet adaptation units (PAE) of the switching system are adapted for forwarding to the line/trunk groups (LTG) and forwarded to the line/trunk groups (LTG), and
- in the line/trunk groups (LTG) the packets forwarded by the packet adaptation units (PAE) are checked with the aid of checking features available as part of the functions of the PSTN switching system and countermeasures available as part of the functions of the PSTN switching system are taken in the event of a fault.

16. Method according to claim 15,
**characterised in that**
- the fault clearance functions provided in the PSTN switching system involves D-channel blocking/unblocking as defined in the V5.2 standard.

17. Method according to one of the previous claims,
**characterised in that**
- one of the network access units (TNE) is an integrated access device (IAD) or an access gateway for terminating PSTN/ISDN telephone lines and adapting the telephony data for the packet network and
- the media gateway control protocol or H.248 is used for signalling between the network access unit (TNE) and the packet network switching system.

18. Method according to one of the previous claims,
**characterised in that**
- the functions of packet adaptation units (PAE) and line/trunk groups (LTG) are made available on a common peripheral hardware platform of the switching system.
